(19)

Europäisches
Patentamt
European
Patent Office
Office européen
des brevets

(11) **EP 2 993 822 A1**

(12) **EUROPEAN PATENT APPLICATION**
published in accordance with Art. 153(4) EPC

(43) Date of publication:
09.03.2016 Bulletin 2016/10

(21) Application number: 14797863.9

(22) Date of filing: 14.05.2014

(51) Int Cl.:
*H04L 12/24* (2006.01)

(86) International application number:
PCT/CN2014/077507

(87) International publication number:
WO 2014/183646 (20.11.2014 Gazette 2014/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.05.2013 CN 201310177784

(71) Applicant: ZTE Corporation
Shenzhen, Guangdong 518057 (CN)

(72) Inventors:
• SUN, Guanglu
Shenzhen
Guangdong 518057 (CN)

• SUN, Hongyue
Shenzhen
Guangdong 518057 (CN)
• MA, Yingcai
Shenzhen
Guangdong 518057 (CN)
• YAN, Rusheng
Shenzhen
Guangdong 518057 (CN)

(74) Representative: Price, Nigel John King
J A Kemp
14 South Square
Gray's Inn
London WC1R 5JJ (GB)

(54) **METHOD, SYSTEM, AND COMPUTER READABLE STORAGE MEDIUM FOR DETECTING GARBAGE ZOMBIE**

(57) Disclosed is a method for detecting a spam bot, including: each mail sent by a monitored host in a network is scored, and it is determined whether the each mail is a normal mail or a junk mail according to comparison between a score of the each mail and a preset classification threshold; it is determined whether the monitored host is a spam bot according to a determination result of the each mail sent by the monitored host. Further disclosed are a system for detecting a spam bot and a computer readable storage medium.

Fig. 1

```
┌──────────────────────────────────────────────────┐ 101
│ Mail traffic sent by a monitored host is extracted │
│ from network traffic flowing through a switch      │
└──────────────────────────────────────────────────┘
                        │
                        ▼
┌──────────────────────────────────────────────────┐ 102
│ Each mail sent by the monitored host in a network  │
│ is scored, and it is determined whether the each   │
│ mail is a normal mail or a junk mail according to  │
│ comparison between a score of the each mail and a  │
│ preset classification threshold T                  │
└──────────────────────────────────────────────────┘
                        │
                        ▼
┌──────────────────────────────────────────────────┐ 103
│ It is determined whether the monitored host is a   │
│ spam bot according to a determination result of    │
│ the each mail sent by the monitored host           │
└──────────────────────────────────────────────────┘
                        │
                        ▼
┌──────────────────────────────────────────────────┐ 104
│ A black and white list of spam bots is generated   │
│ and updated in real time                           │
└──────────────────────────────────────────────────┘
```

Description

TECHNICAL FIELD

The disclosure relates to a technology for filtering a junk mail in the field of computer network security, and particularly to a method and system for detecting a spam bot and a computer readable storage medium.

BACKGROUND

With the popularization of the Internet, junk mails also overrun rapidly and carry a large amount of junk information including advertisements and illegal promotion and so on to bring a lot of inconvenience to many users who use electronic mails normally. In order to solve this problem, various junk mail filtering technologies have emerged to attempt to control the spreading of junk mails.

Anti-spam technologies have developed rapidly in recent years. However, junk mails are also sent with more and more sophisticated technologies. More and more spammers start to send mails by taking advantage of proxies or spam bots (also known as junk mail bots), thereby hiding true sources that send junk mails, and bringing new challenges on detection of the junk mails. It has been shown by further studies that more spammers will be also driven by economic interests to hire a large number of infected network hosts to send junk mails, and such infected network hosts have become major sources that send junk mails at present.

In practical applications, the so-called spam bots, which are generally user terminals and common user hosts, especially those hosts using a Microsoft Windows operating system, are more vulnerable to mail bot viruses. Once infected by a mail bot virus to become a spam bot, an infected host will send a large number of junk mails without being known by its true owner and this sending method is more imperceptible and more difficult to perceive compared with a traditional method.

Generally, spam bots, which will be dispersed in a whole network in a centralized control manner, are highly imperceptible and thus can be hardly detected. Since there are too many spam bots, it will be a disaster to the stability of network infrastructure if spam bots are utilized to launch network attacks. Besides, spam bots may be also utilized to steal properties and confidential information of users, violate privacies of the users, and may be used as springboards for covering tracks and platforms for sending junk mails. These will all have devastating impacts on Internet spaces and virtual communities. As spam bots flood, a large number of junk mails are transmitted by using spam bots, and the number of junk mails is increasing at an alarming rate every year.

Transmission of junk mails needs to be truly blocked from their sources instead of filtering the mails passively during detection of a spam bot in a network, and the blocking from sources will greatly improve filtering of junk mails and is thus a very meaningful job. However, there are few products in this aspect, and the performance of the products can hardly satisfy demands of practical applications.

SUMMARY

In view of the above, in order to solve the problem existing in the prior art, embodiments of the disclosure provide a method and system for detecting a spam bot and a computer readable storage medium that can block transmission of a junk mail from their sources proactively and effectively.

The technical solutions of the embodiments of the disclosure are implemented as follows.

An embodiment of the disclosure provides a method for detecting a spam bot. The method includes:

each mail sent by a monitored host in a network is scored, and whether the each mail is a normal mail or a junk mail is determined according to comparison between a score of the each mail and a preset classification threshold; and

whether the monitored host is a spam bot is determined according to a determination result of the each mail sent by the monitored host.

In an embodiment, before each mail sent by the monitored host in the network is scored, mail traffic sent by the monitored host is extracted from network traffic flowing through a switch.

In an embodiment, a black and white list of spam bots is generated after whether the monitored host is a spam bot is determined, and the black and white list of spam bots is updated in real time.

In an embodiment, a model for determining whether a mail is a normal mail or a junk mail is a logistic regression model or a Support Vector Machine (SVM) model; the step that whether a mail is a normal mail or a junk mail is determined may include:

feature samples of a normal mail and of a junk mail in a knowledge base are trained respectively to obtain a trainer of the normal mail and a trainer of the junk mail;

a normal mail detector and a junk mail detector are formed according to the obtained trainers of the normal mail and the junk mail; and

the normal mail detector and the junk mail detector are connected in series to classify a mail as a normal mail or a junk mail.

In an embodiment, the step that whether the monitored host is a spam bot is determined according to the determination result of the each mail sent by the monitored host may include:

the score of the each mail is normalized; a single determination is made to determine whether the monitored host is a spam bot according to any mail sent by the monitored host; and

an overall determination is made to determine whether the monitored host is a spam bot based on accumulation of single determinations.

In an embodiment, the step that the single determination is made to determine whether the monitored host is a spam bot may include:

probability models of mail samples sent by a normal host $H_0$ and a spam bot $H_1$ are created;

a statistic $\Lambda_i$ is calculated according to $\Lambda_i = \ln \dfrac{\mathrm{P}(X_i \mid H_1)}{\mathrm{P}(X_i \mid H_0)}$,

where ln represents a natural logarithm, $X_i$ represents a normalized score of an $i^{th}$ mail sent by a host m, $\mathrm{P}(X_i \mid H_0)$ represents a probability that a score of a mail sent by the normal host $H_0$ is $X_i$, and $\mathrm{P}(X_i \mid H_1)$ represents a probability that a score of a mail sent by the spam bot $H_1$ is $X_i$; and

whether the host is the normal host $H_0$ or the spam bot $H_1$ is determined according to the statistic obtained through the calculation.

In an embodiment, the probability models apply a Bernoulli model or a Gaussian model.

In an embodiment, the step that the overall determination is made to determine whether the monitored host is a spam bot may include:

an overall determination threshold K and a spam bot threshold F are set;

the monitored host is determined to be a spam bot if the number of times Q that the monitored host is determined as a spam bot is larger than or equal to the spam bot threshold F in K overall determinations;

otherwise, the monitored host is determined to be a normal host if the number of times Q that the monitored host is determined as a spam bot is smaller than the spam bot threshold F.

An embodiment of the disclosure further provides a system for detecting a spam bot, and the system includes a mail filter and a spam bot detector, wherein

the mail filter is configured to score each mail sent by a monitored host in a network, and determine whether the each mail is a normal mail or a junk mail according to comparison between a score of the each mail and a preset classification threshold; and

the spam bot detector is configured to determine whether the monitored host is a spam bot according to a determination result of the each mail sent by the monitored host.

In an embodiment, the system may further include a network tap configured to extract from network traffic flowing through a switch, mail traffic sent by the monitored host, and send the mail traffic to the mail filter.

In an embodiment, the mail filter may include a trainer unit, a detector unit and a classifier unit, wherein

the trainer unit is configured to train feature samples of a normal mail and of a junk mail in a knowledge base respectively to obtain a trainer of the normal mail and a trainer of the junk mail;

the detector unit is configured to form a normal mail detector and a junk mail detector according to the obtained trainer of the normal mail and the junk mail; and

the classifier unit is configured to connect the normal mail detector and the junk mail detector in series to classify a mail as a normal mail or a junk mail.

In an embodiment, the mail filter may further include a knowledge base unit and a knowledge base updating unit, wherein

the knowledge base unit is configured to constantly obtain mails that carry user feedbacks and are sent by each host of the network, and create a knowledge base about normal mails and junk mails;

the knowledge base updating unit is configured to feed back mail classification results to the trainer unit and input the mails carrying the user feedbacks to the trainer unit;

correspondingly, the trainer unit is further configured to learn a classification result of each mail online according to each of the user feedbacks, and update and complete the knowledge base according to a learning result.

In an embodiment, the spam bot detector may include: a normalization unit, a single determination unit and an overall determination unit, wherein

the normalization unit is configured to normalize the score of the each mail;

the single determination unit is configured to make a single determination to determine whether the monitored host is a spam bot according to any mail sent by the monitored host;

the overall determination unit is configured to make an overall determination to determine whether the monitored host is a spam bot based on accumulation of single determinations.

In an embodiment, the spam bot detector may further include a blacklist unit configured to generate a black and white list of spam bots and update the black and white list of spam bots in real time.

In an embodiment, the single determination unit may include a probability model unit, a statistic calculation unit and a single classification unit, wherein

the probability model unit is configured to create probability models of mail samples sent by a normal host $H_0$ and a spam bot $H_1$;

the statistic calculation unit is configured to calculate a statistic $\Lambda_i$ according to $\Lambda_i = \ln \dfrac{P(X_i \mid H_1)}{P(X_i \mid H_0)}$, where ln represents a natural logarithm, $X_i$ represents a normalized score of the $i^{th}$ mail sent by a host m, $P(X_i \mid H_0)$ represents a probability that a score of a mail sent by the normal host $H_0$ is $X_i$, and $P(X_i \mid H_1)$ represents a probability that a score of a mail sent by the spam bot $H_1$ is $X_i$; and

the single classification unit is configured to determine whether the host is the normal host $H_0$ or the spam bot $H_1$ according to the statistic obtained through the calculation.

An embodiment of the disclosure further provides a computer readable storage medium. The computer readable storage medium stores a computer executable instruction for executing the method for detecting a spam bot.

In each embodiment provided by the disclosure, one-to-one correspondences are established between mails sent by hosts in a network and the hosts according to mail traffic in a switch, the mails sent by the hosts are classified into normal mails and junk mails, and it is determined whether a monitored host is a spam bot through mathematical models of a normal host and of a spam bot, thus the embodiments of the disclosure can truly block transmission of junk mails from their sources so as to greatly improve filtering of the junk mails.

Further, the embodiments of the disclosure may further implement a final determination on a spam bot on the basis of classifying and accumulating a plurality of mails, and maintain and update a black and white list of spam bots in real time, thereby providing a basis for processing including removal of a mail bot and so on.

## BRIEF DESCRIPTION OF THE DRAWINGS

Fig. 1 is a flowchart of implementing a method for detecting a spam bot according to an embodiment of the disclosure;
Fig. 2 is a specific flowchart of implementing Step 102 in Fig. 1;
Fig. 3 is a specific flowchart of implementing Step 103 in Fig. 1;
Fig. 4 is a specific flowchart of implementing Step 302 in Fig. 3;
Fig. 5 is a schematic diagram showing the composition of a system for detecting a spam bot according to an embodiment of the disclosure;
Fig. 6 is a schematic diagram showing the composition of a mail filter in Fig. 5;
Fig. 7 is a schematic diagram showing the composition of a spam bot detector in Fig. 5;
Fig. 8 is a schematic diagram showing the composition of a single determination unit in Fig. 7; and
Fig. 9 is an implementation flowchart of using a system for detecting a spam bot according to an embodiment of the disclosure.

## DETAILED DESCRIPTION

The technical solutions of the disclosure will be further expounded hereinafter with reference to the accompanying drawings and specific embodiments.

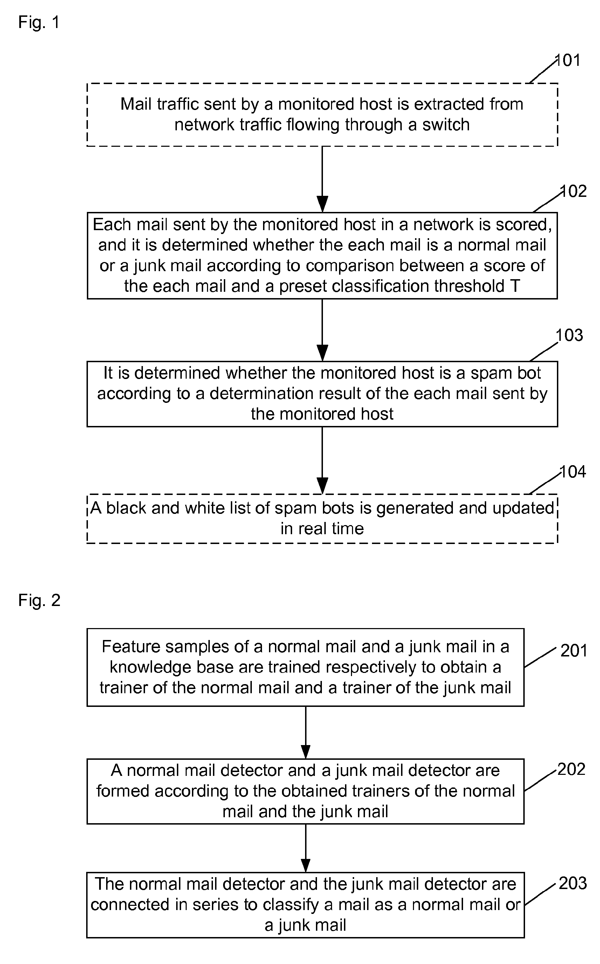

Fig. 1 is a flowchart of implementing a method for detecting a spam bot according to an embodiment of the disclosure. As shown in Fig. 1, the method for detecting a spam bot includes the following steps.

Step 101, mail traffic sent by a monitored host is extracted from network traffic flowing through a switch.

Here, the network traffic flowing through the switch may be shunted by using a network tap, thereby extracting mail traffic sent by each host.

In practical applications, there may be M monitored hosts in a network, and M is a natural number larger than or equal to 1. A serial number of a monitored host in the network may be represented by m, and the monitored host is called host m ($0 \leq m \leq M$) for shorted. An Internet Protocol (IP) address of a host sending a mail may be extracted by analyzing the mail. In this way, a one-to-one correspondence between the IP address of the host and a serial number m of the host in the network is established, thus acquiring mail traffic sent by host m.

Step 102, each mail sent by the monitored host in a network is scored, and it is determined whether the each mail is a normal mail or a junk mail according to comparison between a score of the each mail and a preset classification threshold T.

Here, a score of the $i^{th}$ mail of host m may be represented by $score_i$. A mail with a score lower than the classification threshold T may be a normal mail and a junk mail otherwise, or a mail with a score higher than the classification threshold T may be a normal mail and a junk mail otherwise, which depends on a setting condition of the classification threshold T. Processing processes of determining the classification threshold T, and distinguishing a normal mail or a junk mail through scoring and filtering belong to the prior art, and will not be described repeatedly here.

Step 103, it is determined whether the monitored host is a spam bot according to a determination result of the each mail sent by the monitored host.

Here, hosts in a network are classified into two types: normal hosts $H_0$ and spam bots $H_1$. The spam bots $H_1$ are hosts infected and hijacked by viruses including worms and so on to send junk mails. Since most mails sent by the normal hosts $H_0$ are normal mails in normal conditions and the normal hosts $H_0$ may send junk mails occasionally while most mails sent by the spam bots $H_1$ are junk mails, and the spam bots $H_1$ that are used by users may send a small number of normal mails occasionally, whether a monitored host is a spam bot may be determined according to a determination result of each mail sent by the monitored host. Specifically, if most mails sent by a monitored host are normal mails, e.g. 90% of the mails are normal mails, the monitored host is not a spam bot; otherwise, the monitored host is a spam bot, wherein a determining standard of the proportion of mail traffic in the total mail traffic is determined according to a practical application condition.

Step 101 to Step 103 are included in a spam bot detection process of any monitored host. When a plurality of hosts in a network needs to be detected, detection of another monitored host may be continued after determining whether a current monitored host is a spam bot. In other words, monitored hosts are subjected to Step 101 to Step 103 one by one.

Further, the method for detecting a spam bot of the embodiment of the disclosure may further include Step 104 after it is determined that the monitored host is a spam bot: a black and white list of spam bots is generated and updated in real time.

When a plurality of hosts needs to be detected, a black and white list of spam bots may be generated and updated after each host is detected, or a black and white list of spam bots may be generated and updated in a unified manner after detecting all hosts that need to be detected.

Here, a black and white list of spam bots needs to be maintained on the basis of determination of spam bots, so as to record hosts that are spam bots and hosts that are normal hosts. A format of the black and white list may be: (a host number, a host IP address, whether it is a spam bot, the number of times Q that a spam bot is determined, and the time when a spam bot is determined for the last time).

In a determination of a round of determinations, if it is detected that a normal host $H_0$ is infected with a bot, a field of "whether it is a spam bot" of the host in the black and white list is updated into "yes" while the "the number of times Q that a spam bot is determined" and "the time when a spam bot is determined for the last time" are updated. If it is determined that a spam bot $H_1$ is a normal host $H_0$, a field of "whether it is a spam bot" of the host in the black and white list is updated into "no" and the next determination in the round of determinations is continued. After the round of determinations is completed, an overall determination threshold K and the number of times Q that a spam bot is determined are reset, then monitoring is continued and a new round of determinations is performed. In this way, a change of a monitored network host may be reflected by the black and white list online and in real time.

In the method for detecting a spam bot in Fig. 1, each mail sent by the monitored host in the network may be scored by applying a logistic regression model or a model based on an SVM.

Fig.2 is a specific flowchart of implementing Step 102 in Fig. 1. As shown in Fig. 2, the operation that each mail sent by the monitored host in the network is scored, and whether each mail is a normal mail or a junk mail is determined according to the comparison of the score of the mail and the preset classification threshold T includes the following steps.

Step 201, feature samples of a normal mail and a junk mail in a knowledge base are trained respectively to obtain a trainer of the normal mail and a trainer of the junk mail.

Here, a knowledge base about normal mails and junk mails may be constructed by constantly obtaining mails that carry user feedbacks and are sent by each host of the network.

Step 202, a normal mail detector and a junk mail detector are formed according to the obtained trainers of the normal mail and the junk mail.

Step 203, the normal mail detector and the junk mail detector are connected in series to classify a mail as a normal mail or a junk mail.

Here, the normal mail detector and the junk mail detector, which are connected in series, may be viewed as a mail classifier to detect and classify all passing mails, thereby distinguishing normal mails and junk mails.

Specifically, mails sent by host m are inputted in the normal mail detector and the junk mail detector in the mail classifier in turn during the classification, and normal mails and junk mails are classified according to output of the detectors for the mails.

Here, the detectors need to score each inputted mail, and compare a score of the mail with the preset classification threshold T so as to classify each mail into a normal mail or a junk mail, wherein a score of the $i^{th}$ mail of host m is represented by $score_i$.

Further, after the mails are scored in the embodiment of the disclosure, the method may further include that: classifying results of the mails are fed back to the trainer, and the mails carrying the user feedbacks are also inputted into the trainer; the trainer learns a classifying result of each mail according to user feedbacks online, and further updates and completes the knowledge base according to a learning result, so that detection performance can be improved when each mail arrives.

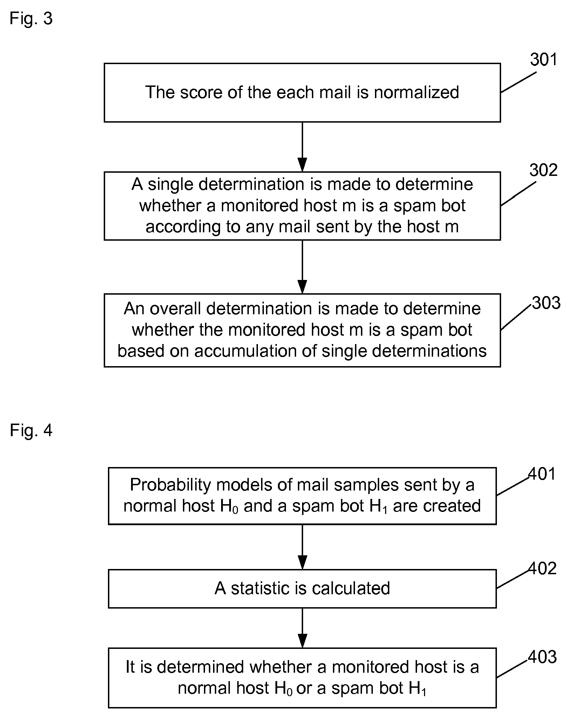

Fig. 3 is a specific flowchart of implementing Step 103 in Fig. 1. As shown in Fig. 3, the operation that whether the monitored host is a spam bot is determined specifically includes:

Step 301, the score of the each mail is normalized.

The score of the each mail may be normalized by using Formula (1) so that the mail scoring in Step 102 is probabilistic.

$$ X_i = \frac{1}{\pi} \arctan(score_i - T) + \frac{1}{2} \qquad (1) $$

In Formula (1), $score_i$ represents a score of the $i^{th}$ mail of host m, T represents a classification threshold, $X_i$ represents a normalized score of the $i^{th}$ mail of host m, and arctan(.) represents a tangent function.

If the model based on the SVM is applied in Step 102, a range of a mail score is $-\infty$ to $+\infty$, and the classification threshold T is 0. Accordingly, $X_i$ is closer to 1 after being adjusted by Formula (1), which indicates that the mail is a junk mail more likely. On the contrary, it is indicated that the mail is a normal mail more likely if $X_i$ is closer to 0.

Step 302, a single determination is made to determine whether the monitored host m is a spam bot according to any mail sent by the monitored host m.

Step 303, an overall determination is made to determine whether the monitored host m is a spam bot based on accumulation of single determinations.

Step 302 is only a single determination on a mail sample. Since information of a plurality of mails may be obtained in the case of network monitoring, an overall determination may be performed by accumulating multiple determinations, thereby enhancing the robustness and reliability of the embodiment of the disclosure.

Specifically, an overall determination threshold K for final determination is set first. If the number of times Q that the monitored host is determined as a spam bot is larger than or equal to a preset spam bot threshold F in K overall determinations, it is considered that there has been enough evidence to prove that the monitored host m is a spam bot $H_i$ in the K overall determinations, and if the number of times Q that the monitored host is determined as a spam bot is smaller than the preset spam bot threshold F, it is considered that the monitored host m is a normal host $H_0$.

In practical applications, the overall determination threshold K may be set as 30 and the spam bot threshold F is set as 25, preferably.

Fig. 4 is a specific flowchart of implementing Step 302 in Fig. 3. As shown in Fig. 4, the operation that the single determination is performed to determine whether the monitored host is a spam bot according to any mail specifically includes the following steps.

Step 401, probability models of mail samples sent by a normal host $H_0$ and a spam bot $H_1$ are created.

Here, the probability models may be a Bernoulli model, and may be also a Gaussian model.

When the Bernoulli model is applied, it is considered that a feature probability density function of a mail sent by the normal host $H_0$ is Formula (2):

$$P(X = spam \mid H_0) = q_0, \quad P(X = ham \mid H_0) = 1 - q_0 \qquad (2)$$

A feature probability density function of a mail sent by the spam bot $H_1$ is Formula (3):

$$P(X = spam \mid H_1) = q_1, \quad P(X = ham \mid H_1) = 1 - q_1 \qquad (3)$$

In Formula (2) and Formula (3), X represents a random variable, *spam* represents a junk mail, *ham* represents a normal mail, $q_0$ represents a probability that the normal host $H_0$ sends a junk mail, $q_1$ represents a probability that the spam bot $H_1$ sends a junk mail, $P(X \mid H_0)$ represents probability distribution of mail samples sent by the normal host and $P(X \mid H_1)$ represents probability distribution of mail samples sent by the spam bot.

Here, the two parameters $q_0$ and $q_1$ both need to be estimated, wherein a method for estimating the parameter $q_0$ includes that: first, mail features of mails sent by a large number of normal hosts $H_0$ are calculated. The mail features may be based on header information, contents and/or ports of the mails; subsequently, whether a mail sent by each host is a junk mail is determined, and the proportion of junk mails in all mails is used as an estimated value of $q_0$. The parameter $q_1$ is estimated in a similar way.

When the Gaussian model is applied, it is assumed that a feature probability density function of a mail sent by the normal host $H_0$ is Formula (4):

$$P(X \mid H_0) = N(X; \mu_0, \sigma_0^2) \qquad (4);$$

a feature probability density function of a mail sent by the spam bot $H_1$ is Formula (5):

$$P(X \mid H_1) = N(X; \mu_1, \sigma_1^2) \qquad (5);$$

In Formula (4) and Formula (5), $\mu_0$, $\sigma_0^2$ and $\mu_1$, $\sigma_1^2$ are the mathematical expectation and variance of Gaussian distribution of Formula (4) and Formula (5), 2 2 respectively, and the parameters $\mu_0$, $\sigma_0^2$ and $\mu_1$, $\sigma_1^2$ may be estimated by using square estimation.

Provided that normalized scores of sequences of N mails sent by the normal host $H_0$ are $X_1$, $X_2$...$X_i$...$X_N$, then the mean value and a variance of the Gaussian distribution of the sent mails may be estimated by Formula (6) and Formula (7):

$$\mu_0 = \frac{1}{N} \sum_{i=1}^{N} X_i \qquad (6)$$

$$\sigma_0^{\ 2} = \frac{1}{N} \sum_{i=1}^{N} (X_i - \mu_0)^2 \qquad (7)$$

A probability distribution parameter of the spam bot $H_1$ is also estimated by using the same method, except that an applied mail sample is sent by a spam bot. All model parameters are estimated offline and stored, so that they can be used for online detection.

Step 402, a statistic $\Lambda_i$ is calculated according to Formula (8).

$$\Lambda_i = \ln \frac{P(X_i \mid H_1)}{P(X_i \mid H_0)} \qquad (8)$$

In Formula (8), In represents a natural logarithm, $X_i$ represents a normalized score of the $i^{th}$ mail sent by a host m, $P(X_i \mid H_0)$ represents a probability that a score of a mail sent by the normal host $H_0$ is $X_i$, and $P(X_i \mid H_1)$ represents a probability that a score of a mail sent by the spam bot $H_1$ is $X_i$.

The score of the mail needs to be provided in Step 102 for the Gaussian model and it is necessary to determine whether the mail is a junk mail or a normal mail directly in Step 102 to calculate Formula (8) for the Bernoulli model.

Step 403, it is determined whether the monitored host is a normal host $H_0$ or a spam bot $H_1$ according to Formula (9).

$$\Lambda_i < 0, \text{ indicating that the monitored host m is a normal host } H_0;$$

$$\Lambda_i \geq 0, \text{ indicating that the monitored host m is a spam bot } H_1; \qquad (9)$$

Here, whether the monitored host m is a spam bot is determined according to information of any mail sent by the monitored host m. If a statistic $\Lambda_i$ of the mail is smaller than 0, the monitored host m is determined to be a normal host $H_0$ this time, and if the statistic $\Lambda_i$ of the mail is larger than or equal to 0, the monitored host m is determined to be a spam bot $H_1$ this time.

A process for implementing the algorithms in Step 301 to Step 302 is as follows.

Input: $X_1, X_2 ... X_i ... X_N$; //$X_i$ is a normalized score of the $i^{th}$ mail of the monitored host m;

Total_num[M]; //Total_num[M] is the number of overall determinations of host m, and M is the total number of monitored hosts;
Corpse_num[M]; //Corpse_num[M] is the number of times that host m is primarily determined as a bot;
K; //overall determination threshold;
F; // spam bot threshold

Output: black and white list of spam bots.

Afterwards, a spam bot may be determined specifically by applying the following procedure.

Begin
For each mail $X_i$
m←serial number of host sending mail $X_i$;

$$\Lambda_i \leftarrow \ln \frac{P(X_i \mid H_1)}{P(X_i \mid H_0)};$$

```
If (Λi≥0)
Corpse_num[m]←Corpse_num[m]+1;
End
Total_num[m]←Total_num[m]+1;
If (Total_num[m]≥K)
   If (Corpse_num[m]≥F)
     a current state of host m in the black and white list is updated into "yes";
     other fields are updated (referring to Step 104);
   Else
     the current state of host m in the black and white list is updated into "no";
     other fields are updated (referring to Step 104);
   End
Total_num[m]←0;
Corpse_num[m]←0;
End
End
```

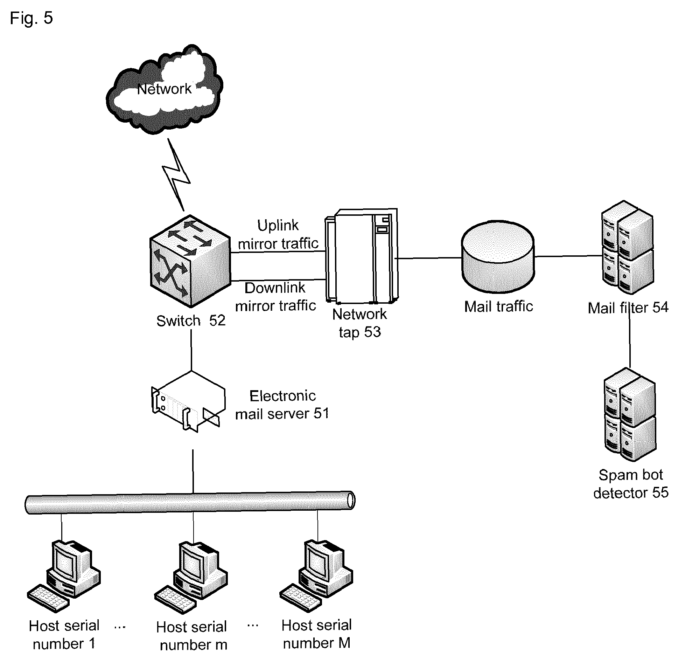

Fig. 5 is a schematic diagram showing the composition of a system for detecting a spam bot according to an embodiment of the disclosure. As shown in Fig. 5, the system for detecting a spam bot according to the embodiment of the disclosure includes an electronic mail server 51, a switch 52, a network tap 53, a mail filter 54, and a spam bot detector 55, wherein the connection between the electronic mail server 51 and the switch 52 follows a classical deployment method, and the electronic mail server 51 is connected to a host of each user by a network.

The network tap 53 is configured to extract, from network traffic flowing through the switch 52, mail traffic sent by a monitored host and send the mail traffic to the mail filter 54.

The mail filter 54 is configured to score each mail sent by the monitored host in the network, and determine whether the each mail is a normal mail or a junk mail according to comparison between a score of the each mail and a preset classification threshold T.

The spam bot detector 55 is configured to determine whether the monitored host is a spam bot according to a determination result of the mail filter 54 for the each mail sent by the monitored host.

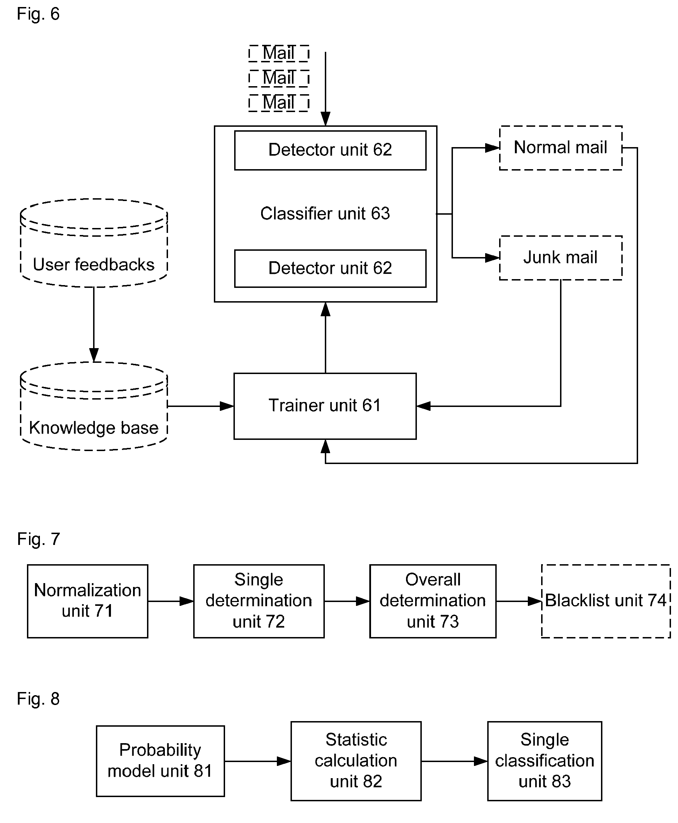

Fig. 6 is a schematic diagram showing the composition of the mail filter in Fig. 5. The mail filter 54 may be based on a logistic regression model and may be also based on an SVM. As shown in Fig. 6, the mail filter 54 includes a trainer unit 61, a detector unit 62 and a classifier unit 63, wherein

the trainer unit 61 is configured to train feature samples of a normal mail and a junk mail in a knowledge base respectively to obtain a trainer of the normal mail and a trainer of the junk mail.

Here, the mail filter 54 may further include a knowledge base unit configured to constantly obtain mails that carry user feedbacks and are sent by each host of the network, and create a knowledge base about normal mails and junk mails.

The detector unit 62 is configured to form a normal mail detector and a junk mail detector according to the obtained trainers of the normal mail and the junk mail.

Here, the detectors need to score each inputted mail, and compare a score of the mail with the preset classification threshold T so as to classify each mail into a normal mail or a junk mail, wherein a score of an $i^{th}$ mail of host m is represented by *score$_i$*.

The classifier unit 63 is configured to connect the normal mail detector and the junk mail detector in series to classify a mail as a normal mail or a junk mail.

Specifically, mails sent by host m are inputted in the normal mail detector and the junk mail detector in the mail classifier in turn during the classification, and normal mails and junk mails are classified according to output of the detectors for the mails.

Further, the mail filter 54 may further include a knowledge base updating unit configured to feed back mail classification results to the trainer unit 61 and input the mails carrying the user feedbacks to the trainer unit 61. Accordingly, the trainer unit 61 is further configured to learn a classification result of each mail online according to user feedbacks, and update and complete the knowledge base according to a learning result, so that detection performance can be improved when each mail arrives.

When classifying a mail as a normal mail or a junk mail, the mail filter 54 inputs the mail sent by monitored host m into the classifier unit 63 formed by connecting the normal mail detector and the junk mail detector in series, and classifies the mail as a normal mail or a junk mail according to output of the normal mail detector and the junk mail detector for the mail. When a plurality of hosts needs to be monitored, each monitored host is used as a current monitored host m respectively, and the mail filter 54 classifies all mails sent by the host.

In the meanwhile, the classification results of the classifier unit 63 for the mails are further fed back to the trainer unit 61, and the mails carrying the user feedbacks in the knowledge base unit are also inputted into the trainer unit 61 simultaneously. The trainer unit 61 learns a classification result of each mail online according to user feedbacks, and updates and completes the knowledge base according to a learning result so that so that performance of the detector unit 62 can be improved when each mail arrives.

Fig. 7 is a schematic diagram showing the composition of the spam bot detector in Fig. 5. As shown in Fig. 7, the spam bot detector includes a normalization unit 71, a single determination unit 72 and an overall determination unit 73, wherein

the normalization unit 71 is configured to normalize the score of the each mail;

the single determination unit 72 is configured to make a single determination to determine whether the monitored host m is a spam bot according to any mail sent by the host m;

the overall determination unit 73 is configured to perform an overall determination to determine whether the host m is a spam bot based on accumulation of single determinations.

Here, the single determination unit 72 only performs a single determination on a mail sample. Since information of a plurality of mails may be obtained in the case of network monitoring, an overall determination may be performed by accumulating multiple determinations, thereby enhancing the robustness and reliability of the system.

Further, the spam bot detector of the embodiment of the disclosure may further include: a blacklist unit 74 configured to generate a blacklist and white list of spam bots after it is determined that the monitored host is a spam bot, and update the blacklist and white list of spam bots in real time.

Fig. 8 is a schematic diagram showing the composition of the single determination unit in Fig. 7. As shown in Fig. 8, the single determination unit includes: a probability model unit 81, a statistic calculation unit 82 and a single classification unit 83, wherein

the probability model unit 81 is configured to create probability models of mail samples sent by a normal host $H_0$ and a spam bot $H_1$;

the statistic calculation unit 82 is configured to calculate a statistic $\Lambda_i$ according to

$$\Lambda_i = \ln \frac{P(X_i \mid H_1)}{P(X_i \mid H_0)},$$

where ln represents a natural logarithm, $X_i$ represents a normalized score of the $i^{th}$ mail sent by a host m, $P(X_i \mid H_0)$ represents a probability that a score of a mail sent by the normal host $H_0$ is $X_i$, and $P(X_i \mid H_1)$ represents a probability that a score of a mail sent by the spam bot $H_1$ is $X_i$;

the single classification unit 83 is configured to determine whether the host is the normal host $H_0$ or the spam bot $H_1$ according to the statistic obtained through the calculation.

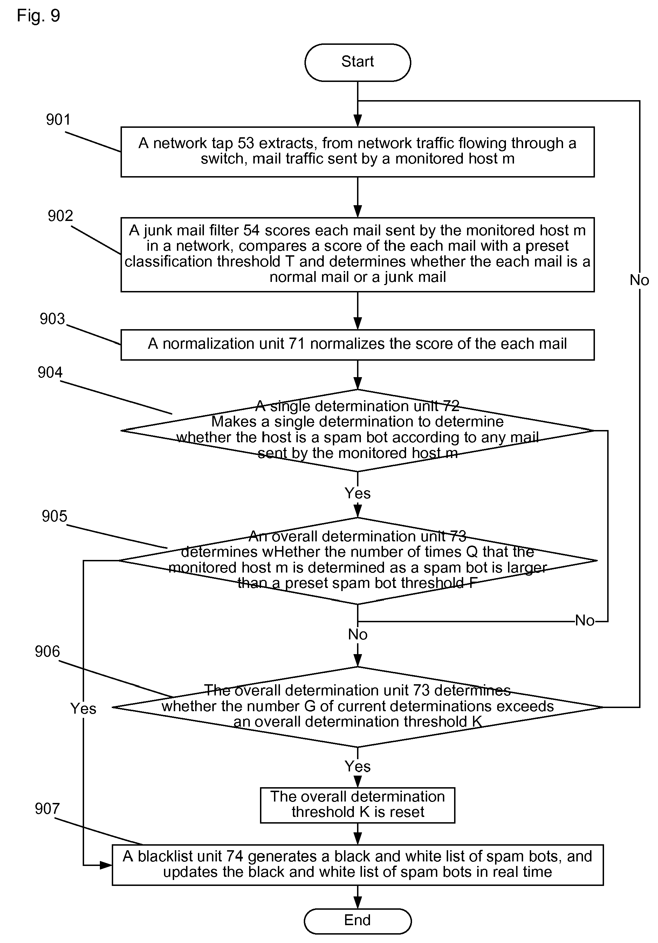

Fig. 9 is an implementation flowchart of using a system for detecting a spam bot according to an embodiment of the disclosure. As shown in Fig. 9, the embodiment of the disclosure uses the system for detecting a spam bot to implement detection of a spam bot, including the following steps:

Step 901, a network tap 53 extracts, from network traffic flowing through a switch, mail traffic sent by a monitored host m.

Step 902, a junk mail filter 54 scores each mail sent by the monitored host m in a network, compares a score of the mail with a preset classification threshold T and determines whether the mail is a normal mail or a junk mail.

Step 903, a normalization unit 71 normalizes a score of a mail.

Step 904, a single determination unit 72 performs a single determination to determine whether the host is a spam bot according to any mail sent by the monitored host m, and if yes, performs Step 905, and otherwise, performs Step 906,

wherein a statistic calculation unit 82 calculates a statistic $\Lambda_i$; a single classification unit 83 performs determinement; if the statistic $\Lambda_i$ is larger than or equal to 0, the monitored host m is determined to be a spam bot $H_1$ in the determinement, the number of times Q that the monitored host m is determined as a spam bot is also increased by 1 and the number G of current determinations of the monitored host m is also increased by 1. If statistic $\Lambda_i$ is smaller than 0, the monitored host m is determined to be a normal host $H_0$ in the determinement, and the number G of current determinations of the monitored host m is also increased by 1.

Step 905, an overall determination unit 73 determines whether the number of times Q that the monitored host m is determined as a spam bot is larger than a preset spam bot threshold F, and if yes, determines that the monitored host m is a spam bot $H_1$, and Step 907 is performed. Otherwise, Step 906 is continued.

Step 906, the overall determination unit 73 determines whether the number G of current determinations exceeds an overall determination threshold K. If yes, the overall determination threshold K is reset and Step 907 is performed. Otherwise, Step 901 is performed again.

Step 907, a blacklist unit 74 generates a black and white list of spam bots, and updates the black and white list of spam bots in real time. The processing flow ends.

Obviously, those skilled in the art should understand that the processing units or steps of the disclosure may be implemented by general computing devices, and may be centralized on a single computing device, or distributed on a network consisting of a plurality of computing devices. For example, the mail filter and the spam bot detector in the embodiment of the disclosure may be centralized on the same computing device. Of course, the mail filter may be integrated on a first computing device while the spam bot detector is integrated on a second computing device, and the first computing device and the second computing device form a network connection. The computing devices here may be devices having a computing capability, including personal computers, laptops, industrial control computers, tablet computers and so on.

The mail filter and the spam bot detector in the system for detecting a spam bot according to the embodiment of the disclosure, and respective units included therein may be implemented by processors in the computing devices above. Of course, they may be also implemented by specific logical circuits. In a process of a specific embodiment, a processor may be a Central Processing Unit (CPU), a Micro Processing Unit (MPU), a Digital Signal Processor (DSP) or a Field-Programmable Gate Array (FPGA) and so on.

In the embodiments of the disclosure, the method for detecting a spam bot may be also stored in a computer readable storage medium if implemented in the form of a software functional module and sold or used as an independent product. Based on such an understanding, the essential part or a part contributing to the prior art of the technical solutions of the embodiments of the disclosure may be embodied in the form of a software product which is stored in storage medium and includes a number of instructions for allowing a computer device (which may be a personal computer, a server, a network device, or the like) to execute all or part of the methods in various embodiments of the disclosure. The storage medium includes various mediums that can store program codes, such as a U disk, a mobile hard disk, a Read-Only Memory (ROM), a magnetic disk, an optical disk and the like. Thus, the embodiments of the disclosure are not limited to any specific combination of hardware and software.

Correspondingly, an embodiment of the disclosure further provides a computer readable storage medium. The computer readable storage medium stores a computer executable instruction and the computer executable instruction is used for executing a method for detecting a spam bot in various embodiments of the disclosure.

The above descriptions are only preferred embodiments of the disclosure, and are not intended to limit the scope of patent protection of the disclosure. All variations of equivalent structures or equivalent flows made to content of the specification and the accompanying drawings of the disclosure or directly or indirectly applied in other related technical fields should be also included in the scope of patent protection of the disclosure.

INDUSTRIAL APPLICABILITY

In an embodiment of the disclosure, each mail sent by a monitored host in a network is scored, whether each mail is a normal mail or a junk mail is determined according to comparison of a score of the mail and a preset classification threshold, and whether the monitored host is a spam bot is determined according to a determination result of each mail sent by the monitored host. In this way, the technical solution provided by the embodiment of the disclosure can truly block transmission of junk mails from their sources, thereby greatly improving filtering of the junk mails.

**Claims**

1. A method for detecting a spam bot, comprising:

   scoring each mail sent by a monitored host in a network, and determining whether the each mail is a normal mail or a junk mail according to comparison between a score of the each mail and a preset classification threshold; and
   determining whether the monitored host is a spam bot according to a determination result of the each mail sent by the monitored host.

2. The method according to claim 1, further comprising: before the scoring each mail sent by a monitored host in a network, extracting from network traffic flowing through a switch, mail traffic sent by the monitored host.

3. The method according to claim 1 or 2, further comprising: generating a black and white list of spam bots after determining whether the monitored host is a spam bot, and updating the black and white list of spam bots in real time.

4. The method according to claim 1 or 2, wherein a model for determining whether a mail is a normal mail or a junk mail is a logistic regression model or a Support Vector Machine (SVM) model;
   the determining whether the each mail is a normal mail or a junk mail comprises:

   training feature samples of a normal mail and of a junk mail in a knowledge base respectively to obtain a trainer of the normal mail and a trainer of the junk mail;
   forming a normal mail detector and a junk mail detector respectively according to the obtained trainers of the normal mail and the junk mail; and
   connecting the normal mail detector and the junk mail detector in series to classify a mail as a normal mail or a junk mail.

5. The method according to claim 1 or 2, wherein the determining whether the monitored host is a spam bot according to a determination result of the each mail sent by the monitored host comprises:

   normalizing the score of the each mail;
   making a single determination to determine whether the monitored host is a spam bot according to any mail sent by the monitored host; and
   making an overall determination to determine whether the monitored host is a spam bot based on accumulation of single determinations.

6. The method according to claim 5, wherein the making a single determination to determine whether the monitored host is a spam bot comprises:

   creating probability models of mail samples sent by a normal host $H_0$ and a spam bot $H_1$;

calculating a statistic $\Lambda_i$ according to $\Lambda_i = \ln \dfrac{P(X_i \mid H_1)}{P(X_i \mid H_0)}$,

where ln represents a natural logarithm, $X_i$ represents a normalized score of an $i^{th}$ mail sent by a host m, $P(X_i \mid H_0)$ represents a probability that a score of a mail sent by the normal host $H_0$ is $X_i$, and $P(X_i \mid H_1)$ represents a probability that a score of a mail sent by the spam bot $H_1$ is $X_i$; and
determining whether the host is the normal host $H_0$ or the spam bot $H_1$ according to the statistic obtained through the calculation.

7. The method according to claim 6, wherein the probability models apply a Bernoulli model or a Gaussian model.

8. The method according to claim 5, wherein the making an overall determination to determine whether the monitored host is a spam bot comprises:

setting an overall determination threshold K and a spam bot threshold F;
determining the monitored host to be a spam bot if the number of times Q that the monitored host is determined as a spam bot is larger than or equal to the spam bot threshold F in K overall determinations, otherwise, determining the monitored host to be a normal host if the number of times Q that the monitored host is determined as a spam bot is smaller than the spam bot threshold F.

9. A system for detecting a spam bot, comprising a mail filter and a spam bot detector, wherein
the mail filter is configured to score each mail sent by a monitored host in a network, and determine whether the each mail is a normal mail or a junk mail according to comparison between a score of the each mail and a preset classification threshold; and
the spam bot detector is configured to determine whether the monitored host is a spam bot according to a determination result of the each mail sent by the monitored host.

10. The system according to claim 9, further comprising a network tap configured to extract from network traffic flowing through a switch, mail traffic sent by the monitored host, and send the mail traffic to the mail filter.

11. The system according to claim 9 or 10, wherein the mail filter comprises a trainer unit, a detector unit and a classifier unit, wherein
the trainer unit is configured to train feature samples of a normal mail and of a junk mail in a knowledge base respectively to obtain a trainer of the normal mail and a trainer of the junk mail;
the detector unit is configured to form a normal mail detector and a junk mail detector respectively according to the obtained trainers of the normal mail and the junk mail; and
the classifier unit is configured to connect the normal mail detector and the junk mail detector in series to classify a mail as a normal mail or a junk mail.

12. The system according to claim 11, wherein the mail filter further comprises a knowledge base unit and a knowledge base updating unit, wherein
the knowledge base unit is configured to constantly obtain mails that carry user feedbacks and are sent by each host of the network, and create a knowledge base about normal mails and junk mails;
the knowledge base updating unit is configured to feed back mail classification results to the trainer unit and input the mails carrying the user feedbacks to the trainer unit;
and wherein the trainer unit is further configured to learn a classification result of each mail online according to each of the user feedbacks, and update and complete the knowledge base according to a learning result.

13. The system according to claim 9, wherein the spam bot detector comprises a normalization unit, a single determination unit and an overall determination unit, wherein
the normalization unit is configured to normalize the score of the each mail;
the single determination unit is configured to make a single determination to determine whether the monitored host is a spam bot according to any mail sent by the monitored host; and
the overall determination unit is configured to make an overall determination to determine whether the monitored host is a spam bot based on accumulation of single determinations.

14. The system according to claim 13, wherein the spam bot detector further comprises a blacklist unit configured to generate a black and white list of spam bots and update the black and white list of spam bots in real time.

15. The system according to claim 13 or 14, wherein the single determination unit comprises a probability model unit, a statistic calculation unit and a single classification unit, wherein
the probability model unit is configured to create probability models of mail samples sent by a normal host $H_0$ and a spam bot $H_1$;

the statistic calculation unit is configured to calculate a statistic $\Lambda_i$ according to $\Lambda_i = \ln \dfrac{P(X_i \mid H_1)}{P(X_i \mid H_0)}$,

where In represents a natural logarithm, $X_i$ represents a normalized score of an $i^{th}$ mail sent by a host m, $P(X_i \mid H_0)$ represents a probability that a score of a mail sent by the normal host $H_0$ is $X_i$, and $P(X_i \mid H_1)$ represents a probability that a score of a mail sent by the spam bot $H_1$ is $X_i$; and
the single classification unit is configured to determine whether the host is the normal host $H_0$ or the spam bot $H_1$ according to the statistic obtained through the calculation.

16. A computer readable storage medium, wherein the computer readable storage medium stores a computer executable instruction for executing the method for detecting a spam bot according to any one of claims 1 to 8.

Fig. 1

101

Mail traffic sent by a monitored host is extracted from
network traffic flowing through a switch

102

Each mail sent by the monitored host in a network is scored,
and it is determined whether the each mail is a normal mail
or a junk mail according to comparison between a score of
the each mail and a preset classification threshold T

103

It is determined whether the monitored host is a spam bot
according to a determination result of the each mail sent by
the monitored host

104

A black and white list of spam bots is generated and updated
in real time

Fig. 2

Feature samples of a normal mail and a junk mail in a
knowledge base are trained respectively to obtain a
trainer of the normal mail and a trainer of the junk mail

201

A normal mail detector and a junk mail detector are
formed according to the obtained trainers of the normal
mail and the junk mail

202

The normal mail detector and the junk mail detector are
connected in series to classify a mail as a normal mail or
a junk mail

203

Fig. 3

```
┌─────────────────────────────────────────────────┐  301
│                                                 │
│      The score of the each mail is normalized    │
│                                                 │
└─────────────────────────────────────────────────┘
                        │
                        ▼
┌─────────────────────────────────────────────────┐  302
│   A single determination is made to determine    │
│   whether a monitored host m is a spam bot        │
│   according to any mail sent by the host m        │
└─────────────────────────────────────────────────┘
                        │
                        ▼
┌─────────────────────────────────────────────────┐  303
│   An overall determination is made to determine   │
│   whether the monitored host m is a spam bot      │
│   based on accumulation of single determinations  │
└─────────────────────────────────────────────────┘
```

Fig. 4

```
┌─────────────────────────────────────────────────┐  401
│   Probability models of mail samples sent by a    │
│   normal host $H_0$ and a spam bot $H_1$ are created │
└─────────────────────────────────────────────────┘
                        │
                        ▼
┌─────────────────────────────────────────────────┐  402
│              A statistic is calculated            │
└─────────────────────────────────────────────────┘
                        │
                        ▼
┌─────────────────────────────────────────────────┐  403
│   It is determined whether a monitored host is a  │
│   normal host $H_0$ or a spam bot $H_1$            │
└─────────────────────────────────────────────────┘
```

Fig. 5

Network

Uplink
mirror traffic

Downlink
mirror traffic

Switch 52

Network
tap 53

Mail traffic

Mail filter 54

Electronic
mail server 51

Spam bot
detector 55

Host serial
number 1

Host serial
number m

Host serial
number M

Fig. 6

Fig. 7

Fig. 8

Fig. 9

```
                                    ┌─────────┐
                                    │  Start  │
                                    └─────────┘
                                         │
901 ─────────────┐                       │
                 │  ┌──────────────────────────────────────────────────┐
                 └──│ A network tap 53 extracts, from network traffic    │
                    │ flowing through a switch, mail traffic sent by a    │──── No
                    │ monitored host m                                    │
                    └──────────────────────────────────────────────────┘
                                         │
902 ─────────────┐                       │
                 │  ┌──────────────────────────────────────────────────┐
                 └──│ A junk mail filter 54 scores each mail sent by the  │
                    │ monitored host m in a network, compares a score of  │
                    │ the each mail with a preset classification          │
                    │ threshold T and determines whether the each mail    │
                    │ is a normal mail or a junk mail                      │
                    └──────────────────────────────────────────────────┘
                                         │
903 ────────┐                            │
            │  ┌──────────────────────────────────────────────────┐
            └──│ A normalization unit 71 normalizes the score of    │
               │ the each mail                                       │
               └──────────────────────────────────────────────────┘
                                         │
904 ────────┐                            │
            │      A single determination unit 72
            └──── Makes a single determination to determine
                  whether the host is a spam bot according to any mail
                       sent by the monitored host m
                                         │
                                        Yes
                                         │
905 ────────┐
            │      An overall determination unit 73
            └──── determines wHether the number of times Q that the
                  monitored host m is determined as a spam bot is larger
                       than a preset spam bot threshold F ──── No
                                         │
                                        No
                                         │
906 ────────┐
            │      The overall determination unit 73 determines
        Yes └──── whether the number G of current determinations exceeds
                       an overall determination threshold K
                                         │
                                        Yes
                                         │
                            ┌──────────────────────────┐
                            │ The overall determination │
                            │ threshold K is reset       │
                            └──────────────────────────┘
                                         │
907 ────────┐  ┌──────────────────────────────────────────────────┐
            └──│ A blacklist unit 74 generates a black and white     │
               │ list of spam bots, and updates the black and white  │
               │ list of spam bots in real time                      │
               └──────────────────────────────────────────────────┘
                                         │
                                    ┌─────────┐
                                    │   End   │
                                    └─────────┘
```

# INTERNATIONAL SEARCH REPORT

| International application No. |
| --- |
| PCT/CN2014/077507 |

**A.  CLASSIFICATION OF SUBJECT MATTER**

H04L 12/24 (2006.01) i

According to International Patent Classification (IPC) or to both national classification and IPC

**B.    FIELDS SEARCHED**

Minimum documentation searched (classification system followed by classification symbols)

H04L; G06F

Documentation searched other than minimum documentation to the extent that such documents are included in the fields searched

Electronic data base consulted during the international search (name of data base and, where practicable, search terms used)

CNTXT, CNABS, CNKI, DWPI: trash, junk, spam, rubbish, garbage, mail, email, server, monitor+, dispatcher, detect+, transmitter, maker, marker, manufacture, account+, caculat+, grade, source, statist+, corpse, suspicious mail, malicious mail, phishing, scor+, host

**C.   DOCUMENTS CONSIDERED TO BE RELEVANT**

| Category* | Citation of document, with indication, where appropriate, of the relevant passages | Relevant to claim No. |
| --- | --- | --- |
| X | CN 1573783 A (MICROSOFT CORPORATION) 02 February 2005 (02.02.2005) description, page 2, line 9 to page 3, line 10, page 7, line 9 to page 12, line 3, and claims 1 to 60 | 1-16 |
| A | CN 101166159 A (ALIBABA CORPORATION) 23 April 2008 (23.04.2008) the whole document | 1-16 |
| A | CN 1700658 A (INST GUANGDONG TELECOM CO., LTD.) 23 November 2005 (23.11.2005) the whole document | 1-16 |

☐ Further documents are listed in the continuation of Box C.       ☒ See patent family annex.

| \* Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04 July 2014 | 25 July 2014 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer XUE, Yu Telephone No. (86-10) 62089405 |
| --- | --- |

Form PCT/ISA /210 (second sheet) (July 2009)

**INTERNATIONAL SEARCH REPORT**
Information on patent family members

International application No.

PCT/CN2014/077507

| Patent Documents referred in the Report | Publication Date | Patent Family | Publication Date |
|---|---|---|---|
| CN 1573783 A | 02 February 2005 | JP 4694146 B2 | 08 June 2011 |
| | | KR 101201045 B1 | 14 November 2012 |
| | | EP 1496655 A2 | 12 January 2005 |
| | | US 2005021649 A1 | 27 January 2005 |
| | | EP 1496655 A3 | 05 October 2005 |
| | | KR 20040110087 A | 29 December 2004 |
| | | JP 2005011325 A | 13 January 2005 |
| | | US 7711779 B2 | 04 May 2010 |
| CN 101166159 A | 23 April 2008 | EP 2075720 A4 | 18 January 2012 |
| | | US 2010094887 A1 | 15 April 2010 |
| | | US 8234291 B2 | 31 July 2012 |
| | | EP 2075720 A1 | 01 July 2009 |
| | | WO 2008046338 A1 | 24 April 2008 |
| | | JP 5397947 B2 | 22 January 2014 |
| | | CN 101166159 B | 28 July 2010 |
| | | HK 1117305 A1 | 01 April 2011 |
| | | JP 2010507153 A | 04 March 2010 |
| CN 1700658 A | 23 November 2005 | CN 100349421 C | 14 November 2007 |

Form PCT/ISA /210 (patent family annex) (July 2009)